# EUROPÄISCHE PATENTSCHRIFT

(11) **EP 3 074 233 B1**
(45) Veröffentlichungstag und Bekanntmachung des Hinweises auf die Patenterteilung: **22.11.2017**
(21) Anmeldenummer: 14792744.6
(22) Anmeldetag: 28.10.2014
(51) Int. Cl.: B41M 1/04

(54) **ROTATIONSDRUCKVERFAHREN**
ROTARY PRINTING METHOD
PROCÉDÉ D'IMPRESSION PAR ROTATIVE

(30) Priorität: 27.11.2013 EP 13005520
(43) Veröffentlichungstag der Anmeldung: 05.10.2016
(73) Patentinhaber: Merck Patent GmbH, 64293 Darmstadt (DE)
(72) Erfinder: BECKER, Andreas, 63329 Egelsbach (DE); RATHSCHLAG, Thomas, 64560 Riedstadt (DE); TASCH, Johannes, 99974 Muehlhausen (DE)
(86) Internationale Anmeldenummer: PCT/EP2014/002893
(87) Internationale Veröffentlichungsnummer: WO 2015/078550

(56) Entgegenhaltungen:
- EP-A2- 2 384 888
- JP-A- 2002 178 654
- US-A1- 2001 029 859

## Beschreibung

Die vorliegende Erfindung betrifft ein Rotationsdruckverfahren zum Aufbringen funktioneller Beschichtungen auf einen Bedruckstoff. Für einen nach dem genannten Verfahren hergestellten beschichteten Bedruckstoff gibt es Verwendung, insbesondere im Verpackungsbereich.

Die verschiedenen gängigen Druckverfahren werden in der Regel zum Bedrucken unterschiedlicher Bedruckstoffe mit einer sichtbaren, schwarzen, weißen oder farbigen Druckfarbe verwendet, die auf den Bedruckstoff in Form von Schriftzeichen, Mustern und/oder Symbolen aufgebracht wird. Je nach Bedarf lassen sich aber auch Teilflächen oder die gesamte zu bedruckende Fläche auf dem Bedruckstoff vollständig mit Druckfarbe beschichten.

Es ist bekannt, dass verschiedene Druckverfahren für jeweils verschiedene Anwendungsgebiete bevorzugt werden, denn die Qualitätsanforderungen an die jeweils erhältlichen Druckbilder sind je nach Anwendungsspektrum des bedruckten Materials genauso unterschiedlich wie die mit den einzelnen Verfahren erzielbaren Druckqualitäten.

Bereits seit Jahren wird für gedruckte Materialien, die in Massenproduktion hergestellt werden und nicht höchsten Qualitätsanforderungen unterliegen, das Flexodruckverfahren als Weiterentwicklung des früher gebräuchlichen Buchdruckverfahrens eingesetzt. Das Flexodruckverfahren kann, bedingt durch die flexiblen Hochdruckformen, die in vergleichsweise unaufwändigen und kostengünstigen Verfahren hergestellt werden können, für viele Bedruckstoffe unterschiedlicher Qualität, die von Folien über Kartonagen bis zu Geweben reichen, eingesetzt werden. Dadurch ist es besonders für den Verpackungsdruck interessant. Flexodruckwerke werden heute im eigentlichen Flexodruck wie auch in der Offsetlackierung eingesetzt.

Neben dem Bedrucken verschiedenster Bedruckstoffe mit farbgebenden Schichten werden inzwischen auch Funktionsschichten auf entsprechende Substrate mit Hilfe von Druckverfahren aufgebracht.

Unter Funktionsschichten werden solche Beschichtungen verstanden, die neben ihrer optisch unter Normalbedingungen sichtbaren Eigenschaften noch über weitere Funktionalitäten verfügen, wie zum Beispiel über Magneteigenschaften, elektrisch leitende oder ableitende Eigenschaften, über UV-Licht oder IR-Licht absorbierende oder reflektierende oder unter diversen Bedingungen lumineszierende Eigenschaften.

Um die gewünschte Funktionalität über die gesamte beschichtete Fläche aufrecht erhalten zu können, ist in der Regel eine bestimmte Schichtdicke der jeweiligen Funktionsschicht nötig. Daher werden für das Aufbringen funktioneller Schichten solche Druckverfahren ausgewählt, die die benötigten Schichtdicken wegen der Besonderheiten der jeweiligen Drucktechnik auch liefern können. Bevorzugt werden hier die üblichen Tiefdruckverfahren oder auch Siebdruckverfahren eingesetzt, mit denen je nach Viskosität der Druckfarbe vergleichsweise hohe Schichtdicken erhalten werden können.

So ist beispielsweise in der DE 693 16 346 T2 eine antistatische Folie beschrieben, die eine Beschichtung aufweist, die plättchenförmige Pigmente enthält, die mit einer elektrisch leitenden Schicht aus einem dotierten Metalloxid versehen sind. Die Oberflächenbeschichtung der Folie kann durch Imprägnieren der Folie, übliche Beschichtungsverfahren wie ein Rakelauftragsverfahren, oder auch durch Drucken erfolgen. Ein bestimmtes Druckverfahren oder Details hierzu sind nicht beschrieben.

Aus der DE 10 2005 002 059 A1 ist ein Holzwerkstoff mit ableitfähiger Oberfläche bekannt. Hierbei erhält ein plattenförmiger Holzwerkstoff eine Oberflächenbeschichtung, die aus einem Kunstharz besteht, welches elektrisch leitfähige Partikel enthält. Das Aufbringen der Kunstharzschicht erfolgt in der Regel durch Imprägnieren, kann jedoch auch über eine Tiefdruckvorrichtung vorgenommen werden. Aus der EP 2384888 ist ein Rotationsdruckverfahren zum Auftragen einer Beschichtung auf einen Bedruckstoff bekannt. Gerade an elektrisch leitfähigen oder elektrisch ableitfähigen Beschichtungen auf unterschiedlichen Substraten besteht inzwischen ein erhöhter Bedarf. Sensible moderne elektronische Bauteile verschiedenster Art werden mit Hilfe ihrer Verpackung immer häufiger vor ungewollten Schäden geschützt, die beim Transport oder bei der Lagerung durch plötzliche Entladung vorab aufgebauter elektrischer Ladung entstehen kann. Dieser Entladungsvorgang kann völlig unbemerkt vor sich gehen und zur Beschädigung oder sogar kompletten Zerstörung der elektronischen Bauteile führen. Aus diesem Grunde werden Verpackungsmaterialien wie Kartonagen, Papier oder Folien mit Hilfe von Beschichtungs- oder Bedampfungsverfahren mit dünnen funktionellen Schichten versehen, die der Oberfläche dieser Materialien eine gewisse elektrische Leitfähigkeit beziehungsweise Ableitfähigkeit verleihen und elektrische Widerstände im Bereich von 10¹⁰ bis 10⁴ Ohm aufweisen.

Um eine für eine gute Ableitfähigkeit notwendige Schichtdicke der funktionellen Schicht zu erzielen, werden die Verpackungsmaterialien meist in einem separaten Beschichtungsschritt, vor dem Bedrucken mit einer Beschriftung oder Bemusterung, mit elektrisch leitfähigen Schichten beschichtet. Das erhöht den Aufwand für die Herstellung geeigneter Verpackungen beträchtlich, da ein Inline-Bedrucken der Substrate nicht möglich ist. Bei dem Versuch, übliche Flexodruckverfahren mit Standardparametern zur Aufbringung elektrisch leitfähiger Schichten auf Kartonagen zu verwenden, konnten bisher lediglich elektrische Widerstände von maximal 10⁷ Ohm erhalten werden, die für die gewünschte elektrische Ableitfähigkeit der Verpackung meist nicht ausreichen. Grund dafür sind zu geringe Schichtdicken und Abrisse der Beschichtung innerhalb der Schicht.

Diese Mängel konnten bisher nur durch eine aufwändige Mehrfachwiederholung des Druckprozesses ausgeglichen werden.

Die Aufgabe der vorliegenden Erfindung besteht daher darin, ein Rotationsdruckverfahren zur Verfügung zu stellen, mit Hilfe dessen verschiedene Bedruckstoffe, insbesondere solche mit rauer, saugfähiger Oberfläche, in einem einzigen Arbeitsschritt mit einer funktionellen Beschichtung versehen werden können, die keine Fehlstellen aufweist und über eine ausreichend hohe Schichtdicke verfügt um die jeweilige Funktionalität über die gesamte bedruckte Fläche aufrecht zu halten. Aus dem Rotationsdruckverfahren der Erfindung resultiert ein Bedruckstoff mit einer funktionellen Beschichtung. Eine mögliche Verwendung von derart mit funktionellen Schichten beschichteten Bedruckstoffen ergibt sich aus der Funktion der Beschichtung. Die Aufgabe der vorliegenden Erfindung wird gelöst durch ein Rotationsdruckverfahren zum Auftragen einer Beschichtung auf einen Bedruckstoff wie in Anspruch 1 definiert. Ein Bedruckstoff mit funktioneller Beschichtung, der nach dem vorab genannten Rotationsdruckverfahren hergestellt ist, kann insbesondere in Verpackungsmaterialien, Etiketten, Antistatikmaterialien, Dekorationsmaterialien, in Sicherheitsanwendungen, zur Lasermarkierung, als magnetisches Element oder als Leuchtelement verwendet werden. Gegenstand der vorliegenden Erfindung ist demnach ein Rotationsdruckverfahren gemäß Anspruch 1.

Bei dem erfindungsgemäßen Rotationsdruckverfahren handelt es sich um ein Rotationsdruckverfahren, bei dem üblicherweise ein oder mehrere Flexodruckwerke eingesetzt werden. Insbesondere handelt es sich um ein Flexodruckverfahren im eigentlichen Sinne oder um ein Offsetlackierungsverfahren.

Ein übliches Flexodruckverfahren gemäß dem Stand der Technik, mit Hilfe dessen eine Beschichtung auf einen Bedruckstoff aufgebracht werden soll, erfolgt in der Regel gemäß den folgenden Schritten:
In einem Befüllungsschritt werden auf einer rotierenden Rasterwalze (3) angeordnete Näpfchen (6) mit einer Druckfarbe (4) befüllt und die überstehende Druckfarbe mittels einer Rakel (7) abgestreift. Nachfolgend benetzt in einem Benetzungsschritt die Druckfarbe (4) aus den Näpfchen (6) der Rasterwalze (3) die Stirnflächen (13) von Rasterpunkten (10), die auf einer flexiblen, auf einem rotierenden Formzylinder (8) befestigten, Druckform (9) angeordnet sind. Die Rasterpunkte (10) weisen neben den Stirnflächen (13) auch daran angrenzende Mantelflächen (14) auf. Im Druckfarben-Übertragungsschritt wird dann der Bedruckstoff (12) durch einen rotierenden Druckzylinder (11) an die Druckform (9) radial angepresst und die Druckfarbe (4) von den Stirnflächen (13) auf den Bedruckstoff (12) übertragen. Anschließend wird die Druckfarbe getrocknet oder anderweitig verfestigt.

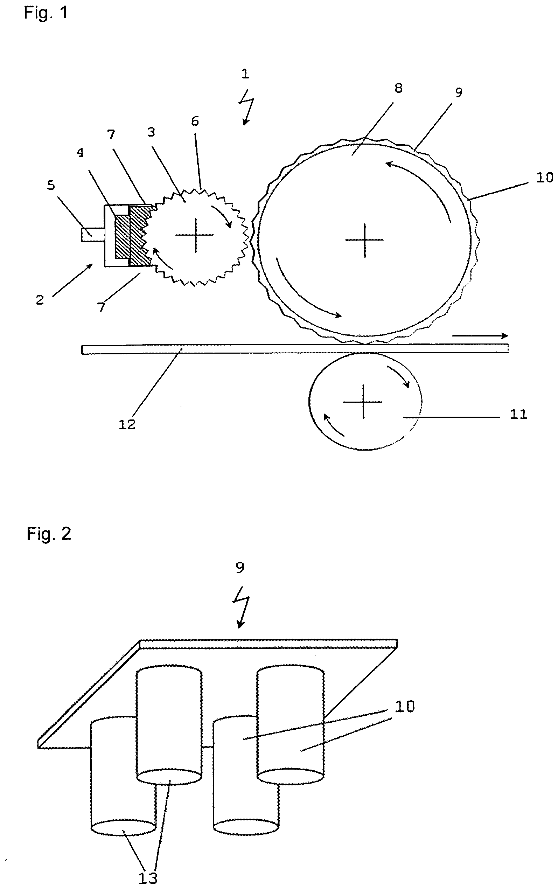

Das Funktionsprinzip eines üblichen Flexodruckverfahrens ist in Figur 1 beschrieben. Entsprechend verläuft im Prinzip auch das Rotationsdruckverfahren gemäß der vorliegenden Erfindung. Die Pfeile bezeichnen die Drehrichtung der jeweiligen Walzen. Ausschnitte einer Druckform mit Rasterpunkten sind in Figur 2 dargestellt.

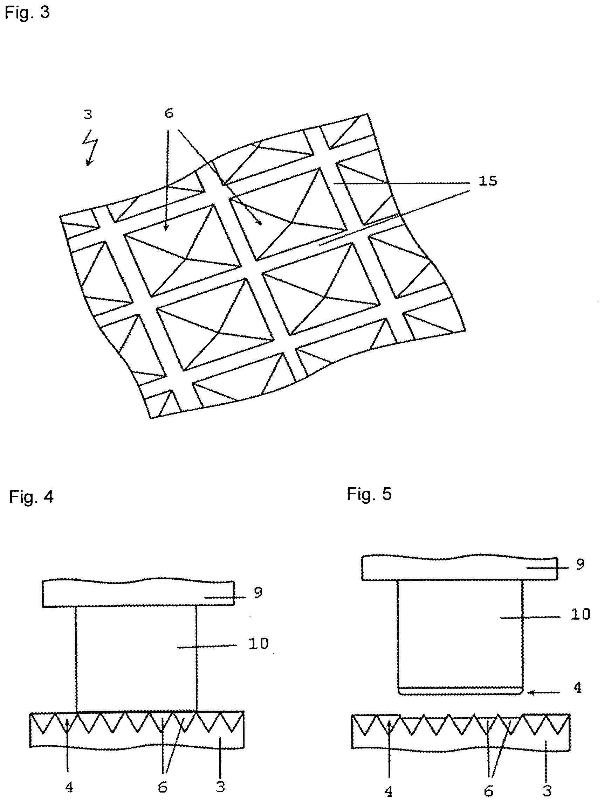

Die Benetzung von Rasterpunktstirnflächen mit Druckfarbe mittels einer Rasterwalze gemäß dem Stand der Technik zeigen die Figuren 4 und 5.

Allgemein gelten für Flexodruckverfahren, unabhängig davon, ob der Bedruckstoff vollflächig oder mit Schriftzeichen und/oder Mustern bedruckt werden soll, die Faustregeln, dass die Rasterfrequenz der Rasterwalze mindestens um den Faktor 5,5 größer sein sollte als die Rasterfrequenz des Klischees (der Druckwalze), damit Fehlstellen in der Einfärbung und/oder Moire-Erscheinungen vermieden werden, und dass das Schöpfvolumen der Rasterwalze etwa das Doppelte des gewünschten Farbauftrags auf dem Bedruckstoff betragen sollte (siehe H. Kippan, Hrsg., Handbuch der Printmedien, Springer Verlag Berlin, 2000, S. 416).
Diese Faustregeln stellen die Voraussetzungen zur Erzielung eines qualitativ hochwertigen Druckergebnisses dar.

Unter Befolgung dieser Regeln erfolgt die Farbaufnahme der Rasterpunkte aus den Näpfchen (4) der Rasterwalze (3) wie in den Figuren 4 und 5 dargestellt, nämlich über eine ausschließliche Benetzung der Stirnflächen (13) der Rasterpunkte, von denen die Druckfarbe (4) später direkt auf den Bedruckstoff (12) übertragen wird. Für das Bedrucken von verschiedenen Bedruckstoffen mit rein farbgebenden Schichten sind diese Regeln weiterhin gültig.

Es hat sich jedoch herausgestellt, dass die Befolgung der oben genannten Regeln beim Aufbringen von funktionellen Beschichtungen mit Hilfe eines Rotationsdruckverfahrens mit Flexodruckwerk nicht uneingeschränkt zum gewünschten Erfolg führt, da insbesondere bei saugfähigen Bedruckstoffen wie beispielsweise Kartonagen aller Art und bei Druckfarben, die funktionelle Pigmente enthalten, die Schichtdicke der auf den Bedruckstoff aufgebrachten Druckschicht und die Konzentration der funktionellen Pigmente in dieser Druckschicht nicht ausreichen um die gewünschte Funktionalität herzustellen und über den gesamten bedruckten Flächenbereich aufrecht zu erhalten.

Es konnte nun in überraschender Weise gefunden werden, dass das Bedrucken von Bedruckstoffen mit funktionellen Schichten erleichtert und die Qualität und Funktionalität der erhaltenen Schichten deutlich verbessert werden kann, wenn gegen die oben genannten Faustregeln verstoßen wird und die Rasterpunktgröße und damit die Rasterfrequenz der Druckwalze so ausgestaltet ist, dass neben den Stirnflächen der Rasterpunkte auch die an die Stirnflächen unmittelbar angrenzenden Mantelflächen der Rasterpunkte beim Kontakt der Druckform mit der Rasterwalze (dem Benetzungsschritt) benetzt werden. Dies wird (für 50 Prozent der Rasterpunkte) gewährleistet, indem mindestens 50 Prozent der Rasterpunkte solche geringen Ausmaße, relativ zu den Näpfchen der Rasterwalze, aufweisen, dass sie während des Benetzungsschrittes in die Näpfchen der Rasterwalze eintauchen.

Dabei werden die Mantelflächen der eintauchenden Rasterpunkte je nach Eintauchtiefe und Fortschreiten des Druckvorgangs teilweise oder vollständig (10 bis 100% der jeweiligen Mantelfläche) mit der Druckfarbe benetzt. Diese zusätzliche Benetzung der Mantelflächen der Rasterpunkte bewirkt eine vollständigere Entleerung der Näpfchen beim Benetzungsvorgang, so dass die sich in den Näpfchen befindliche Druckfarbe zu mehr als den ansonsten üblichen etwa 50 Prozent des Schöpfvolumens entleert und die Farbspaltung zugunsten der aufzubringenden Druckschicht verschoben wird. Mit dem gleichen Schöpfvolumen der Näpfchen kann also eine, im Vergleich zum Stand der Technik, höhere Schichtdicke auf den Bedruckstoff übertragen werden.

Während eine derart erhöhte Schichtdicke im üblichen Farbdruckverfahren zu einer Überfärbung oder zu Farbüberlagerungseffekten führen würde, stellt sie beim Auftrag von funktionellen Schichten sicher, dass Druckschichten mit ausreichender Schichtdicke, die zusammenhängend über die gesamte gedruckte Fläche ausgestaltet sind, keine Fehlstellen aufweisen und an allen Punkten der bedruckten Fläche über eine ausreichend hohe Funktionalität verfügen, aufgebracht werden können. Dies ist insbesondere bei stark saugenden Bedruckstoffen wie Papier (gestrichen oder ungestrichen), Pappe, Kraftpapier, Kraftliner und verschiedenen anderen Kartonagen sowie bei Geweben und Vliesen von Vorteil, bei denen die in der Druckfarbe üblicherweise vorhandenen Lösemittel oft sehr schnell in den Bedruckstoff wegschlagen und dadurch ein Zusammenlaufen der einzelnen Druckpunkte zu flächigen Schichten erschwert wird. Weisen die funktionellen Druckfarben funktionelle Pigmente auf, führt ein erhöhter Schichtdickenauftrag dazu, dass die Konzentration der funktionellen Pigmente pro Flächeneinheit ausreichend hoch ist, um die Funktionalität der Gesamtdruckschicht an jeder Stelle der Schicht gewährleisten zu können. Bei einem Flexodruckverfahren, welches mit den bisher üblichen Parametern ausgeführt wird, kann dies wegen der technologisch begrenzten Pigmentvolumenkonzentration in der Druckfarbe und der ohnehin bei einem Flexodruckverfahren sehr geringen Schichtdicken im Bereich weniger Mikrometer (2-5 µm, bevorzugt 2-3 µm) nicht durchgängig gewährleistet werden.

Vorteilhafterweise tauchen erfindungsgemäß mindestens 70 Prozent der Rasterpunkte der Druckform während des Benetzungsvorgangs in die Näpfchen der Rasterwalze ein, so dass deren Mantelflächen zusätzlich zu den Stirnflächen mit Druckfarbe benetzt werden.

Es versteht sich von selbst, dass entweder bei gleichbleibendem Klischeeraster (Raster der Druckform) die Größe der Näpfchen der Rasterwalze erfindungsgemäß so angepasst wird, dass mindestens 50 % der Rasterpunkte der Druckform in die Näpfchen eintauchen können, oder dass, bei gleichbleibendem Raster der Rasterwalze, das Raster der Druckform entsprechend angepasst wird. Zur Verringerung der Rasterpunktgröße bei gegebener Rasterfrequenz der Druckform ist es auch oft ausreichend, die Flächendeckung der Rasterpunkte so zu verringern, dass die Rasterpunkte in die Näpfchen der Rasterwalze eintauchen können. Als besonders vorteilhaft haben sich Bereiche mit gleich oder weniger als 50% Flächendeckung der Rasterpunkte bei gegebener Rasterfrequenz der Druckform herausgestellt. Ist eine Auswahl von Rasterwalzen und Druckformen in jeweils verschiedenen Rasterungen vorhanden, können lediglich die entsprechenden Walzen in ihrem jeweiligen Raster aufeinander abgestimmt erfindungsgemäß eingesetzt werden. Müssen dagegen entsprechende Walzen oder Druckformen neu hergestellt werden, empfiehlt sich die Neuanfertigung einer entsprechend angepassten Druckform, da die flexiblen Druckformen für ein Flexodruckverfahren deutlich einfacher und kostengünstiger herstellbar sind als die entsprechenden Rasterwalzen.

Obwohl es für die Durchführung des erfindungsgemäßen Verfahrens nicht zwingend notwendig ist erweist es sich als vorteilhaft, wenn die Näpfchen der Rasterwalze über die gesamte Fläche der Rasterwalze die gleiche Form und Größe aufweisen. Dabei ist es unerheblich, mit welchem der üblichen Herstellungsverfahren die Näpfchen graviert werden. Als geeignet haben sich alle mit gebräuchlichen Verfahren, also durch Ätzgravur, mechanische Gravur oder Lasergravur beziehungsweise Laserdirektgravur hergestellten Rasterwalzen erwiesen. Die dabei erhältliche Form der Näpfchen ist jeweils unterschiedlich. Während mechanisch gravierte Näpfchen die Form einer auf den Kopf gestellten Pyramide aufweisen, siehe Figur 3, haben geätzte und lasergravierte Näpfchen einen runden Querschnitt. Letztere lassen auch, bedingt durch ihre zylinderähnliche Form, insgesamt ein größeres Schöpfvolumen sowie eine höhere Eindringtiefe der Rasterpunkte zu und werden daher für das erfindungsgemäße Verfahren bevorzugt eingesetzt.

Erfindungsgemäß wird die Näpfchenweite, die sich aus dem Durchmesser runder Näpfchen oder der kleinsten Seitenkantenlänge mechanisch gravierter Näpfchen bestimmt, als W bezeichnet.

Ähnlich wie bei den Näpfchen der Rasterwalze ist es bei den Rasterpunkten der erfindungsgemäß eingesetzten Druckform vorteilhaft, wenn die Größe und die Form der Rasterpunkte über die gesamte gerasterte Fläche der Druckform gleich ist. Dadurch wird das Eintauchen einer Vielzahl von Rasterpunkten in die Näpfchen der Rasterwalze erleichtert. Die Rasterpunkte weisen regelmäßig einen runden Querschnitt auf. Die Größe der Rasterpunkte, die dem Durchmesser der Stirnfläche entspricht, wird erfindungsgemäß mit G bezeichnet. Es können alle nach den gebräuchlichen Verfahren hergestellten Flexodruckformen verwendet werden, die ein- oder mehrschichtig aufgebaut sein und aus verschiedenen Materialien (Gummi, Elastomere, Fotopolymere) bestehen können.

Erfindungsgemäß weist das Verhältnis G/W (Rasterpunktgröße der Druckform/Näpfchenweite der Rasterwalze) einen Wert im Bereich von 0,05 bis 0,80 auf, vorzugsweise einen Wert im Bereich von 0,15 bis 0,60.

Das bedeutet, dass die Größe der Rasterpunkte erfindungsgemäß lediglich im Bereich von 5 bis 80%, vorzugsweise von 15 bis 60%, der Näpfchenweite liegt. Damit wird das Eintauchen einer großen Anzahl der auf der Druckform vorhandenen Rasterpunkte in die Näpfchen der Rasterwalze ermöglicht.

Je nach Art der jeweils gewünschten funktionellen Beschichtung kann sich der Anteil der bedruckten Fläche auf dem Bedruckstoff relativ zur gesamten bedruckbaren Fläche des Bedruckstoffes unterschiedlich gestalten. Abhängig vom Anteil der zu bedruckenden Fläche auf dem Bedruckstoff wird die Rasterung auf der Druckform ausgewählt. Sollen nur Teilflächen des Bedruckstoffes mit der funktionellen Beschichtung versehen werden, ist auch lediglich eine teilflächige Rasterung auf der Druckform erforderlich. Daher beträgt der Anteil der mit einem Raster versehenen Oberfläche der Druckform in der Regel zwischen 5 und 100 Prozent der Gesamtoberfläche, vorzugsweise zwischen 30 und 100 Prozent. Insbesondere liegt der Anteil der mit einem Raster versehenen Oberfläche der Druckform bei einigen Ausführungsformen der vorliegenden Erfindung bei 100 Prozent der Oberfläche der Druckform.

Die im erfindungsgemäßen Verfahren eingesetzten Druckformen wie auch die verwendeten Rasterwalzen weisen vorzugsweise eine Rasterfrequenz im Bereich von 34 Linien/cm (34 L/cm) bis 60 Linien/cm (60 Ucm) auf. Vorzugsweise weisen Druckform und Rasterwalze jeweils die gleiche Rasterfrequenz auf.

Als funktionelles Material wird erfindungsgemäß ein Material betrachtet, welches neben den unter Normalbedingungen (Licht im sichtbaren Wellenlängenbereich, Normaldruck und Normaltemperatur) optisch sichtbaren Eigenschaften noch andere optische, magnetische oder elektrische Eigenschaften aufweist. Dabei handelt es sich vorzugsweise um ein Material, welches magnetisierbar, elektrisch leitend, elektrisch halbleitend, elektrisch ableitend, UV-absorbierend, UV-reflektierend, IR-absorbierend, IR-reflektierend, strahlenteilend oder, bei Einstrahlung von Licht definierter Wellenlängen, lumineszierend ist.

So kann die erfindungsgemäß eingesetzte Druckfarbe beispielsweise funktionelle Polymere enthalten oder daraus bestehen.

Als funktionelle Polymere werden zum Beispiel flüssigkristalline polymere Materialien eingesetzt, die als cholesterische Materialien nicht nur im sichtbaren Wellenlängenbereich unter verschiedenen Betrachtungswinkeln in unterschiedlichen Farben erscheinen (optische Variabilität), sondern bedingt durch ihre selektive Lichtreflexion in polymerisierter Form auch als Strahlenteiler bzw. Polarisationsfilter eingesetzt werden können. Nematische flüssigkristalline Materialien können dagegen erst mit Hilfe eines Polarisationsfilters optisch sichtbar gemacht werden. Materialbeschränkend wirkt hier neben den gewünschten funktionellen Eigenschaften lediglich die Einstellung einer geeigneten Druckviskosität, die an das erfindungsgemäße Druckverfahren, welches mit herkömmlichen Flexodruckwerken arbeitet, angepasst werden muss, und die Fähigkeit zu einer schnellen Verfestigung der aufgebrachten Beschichtung nach Abschluss des Druckvorgangs.

Funktionelle Polymere im Sinne der vorliegenden Erfindung sind jedoch auch elektrisch leitfähige Polymere, die in druckbarer Form (flüssig oder in einer Lösemitteldispersion bzw. -suspension) ebenfalls in den erfindungsgemäß verwendeten Druckfarben eingesetzt werden können. Hierbei können alle bekannten elektrisch leitfähigen Polymere verwendet werden, die sich in monomerer oder polymerer Form mit Hilfe eines Flexodruckverfahrens verdrucken lassen und anschließend entweder beim Aushärten polymerisiert werden oder lediglich getrocknet werden müssen.

Die erfindungsgemäß eingesetzte Druckfarbe kann jedoch auch funktionelle Pigmente sowie mindestens ein Bindemittel enthalten.

Der zusätzliche Einsatz eines Lösemittels, welches aus Wasser und/oder den üblichen organischen, für Druckverfahren verwendeten Lösemitteln oder Lösemittelgemischen bestehen kann, ist teilweise vorteilhaft, aber nicht zwingend, weil viele Bindemittelsysteme, die in Flexodruckverfahren eingesetzt werden können, strahlenhärtend sind und daher der zusätzliche Einsatz von Lösemitteln ganz oder teilweise obsolet ist.
Als organische Lösemittel können verzweigte oder unverzweigte Alkohole, Aromaten oder Alkyester, wie Ethanol, 1-Methoxy-Propanol, 1-Ethoxy-2-Propanol, Ethylacetat, Butylacetat, Toluol etc., oder deren Gemische verwendet werden.

Als Bindemittel kommen allgemein für Beschichtungszusammensetzungen übliche Bindemittel in Betracht, insbesondere solche auf der Basis von Nitrocellulose, Polyamid, Acryl, Polyvinybutyral, PVC, PUR, oder geeignete Gemische aus diesen. Insbesondere bevorzugt sind Bindemittel auf UVhärtender Basis (radikalisch oder kationisch härtend). Diese Bindemittel oder Bindemittelgemische sind vorzugsweise nach dem Aushärten der Beschichtung transparent, können jedoch auch transluzent oder opak ausgestaltet sein. Als Bindemittel können auch die vorab genannten funktionellen Polymere eingesetzt werden, die zusätzlich zu ihrer eigenen Funktionalität noch funktionelle Pigmente mit gleicher oder verschiedener Funktionalität enthalten können.

Funktionelle Pigmente gemäß der vorliegenden Erfindung sind insbesondere elektrisch leitfähige Pigmente, elektrisch halbleitende Pigmente, magnetisierbare Pigmente, UV-Licht absorbierende oder reflektierende Pigmente, IR-Licht absorbierende oder reflektierende Pigmente, bei Einstrahlung von Licht definierter Wellenlängen lumineszierende Pigmente und/oder flüssigkristalline Pigmente. Die eingesetzten Pigmente können auch multifunktionell sein, beispielsweise UV-Licht absorbieren und sichtbares Licht emittieren oder IR-Licht reflektieren und im sichtbaren Wellenlängenbereich eine optische Variabilität aufweisen. Sie können, je nach Funktionalität und Zusammensetzung, eine isotrope oder anisotrope Formgebung aufweisen.

Es können in allgemeinen die aus dem Stand der Technik bekannten Pigmente der oben beschriebenen Art eingesetzt werden. So bestehen magnetisierbare Pigmente beispielsweise aus Magnetit, Maghemit oder magnetisierbaren Metalllegierungen oder weisen Schichten aus diesen auf. UV-Absorption oder UV-Reflexion bzw. IR-Absorption oder IR-Reflexion lässt sich unter anderem mit Interferenzpigmenten erzielen, deren Schichtaufbau und Schichtdickenkonstruktion genau auf die gewünschten Bedingungen eingestellt wird.

Erfindungsgemäß besonders bevorzugt werden elektrisch leitfähige oder elektrisch halbleitfähige Pigmente eingesetzt. Diese können aus Metallpartikeln wie zum Beispiel Silberpartikeln, Kupferpartikeln, Eisenspänen, Stahlpartikeln, aber auch aus nichtmetallischen Partikeln wie Graphit, Leitruß, Partikeln aus leitfähigen Polymeren, Partikeln, die aus leitfähigen Metallverbindungen bestehen oder aus nichtmetallischen Substraten, die von elektrisch leitfähigen Verbindungen umhüllt sind, bestehen.

Bei den nichtmetallischen Substraten handelt es vorzugsweise um Partikel aus natürlichem oder synthetischem Glimmer, Talk, Sericit, Glas, SiO₂, Al₂O₃ oder TiO₂, die eine Beschichtung aus einem leitfähigen Material, insbesondere aus Metalloxiden oder Metalloxidgemischen, die in der Regel mit Fremdatomen dotiert sind, aufweisen.

Bei den Metalloxiden handelt es sich vorzugsweise um Zinnoxid, Zinkoxid, Indiumoxid und/oder Titanoxid, vorzugsweise um Zinnoxid, Indiumoxid und/oder Zinkoxid. Die genannten Metalloxide liegen in der leitfähigen Beschichtung dotiert vor, wobei die Dotierung mit Gallium, Aluminium,

Indium, Thallium, Germanium, Zinn, Phosphor, Arsen, Antimon, Selen, Tellur, Molybdän, Wolfram und/oder Fluor erfolgen kann. Dabei können in der leitfähigen Schicht einzelne der genannten Dotierstoffe, aber auch Kombinationen hieraus vorliegen. Vorzugsweise werden Aluminium, Indium, Wolfram, Tellur, Fluor, Phosphor und/oder Antimon zur Dotierung der Metalloxide eingesetzt. Der Anteil der Dotierstoffe in der leitfähigen Schicht kann 0,1 bis 30 Gew.-% betragen, vorzugsweise liegt er im Bereich von 2 bis 15 Gew.-%.

In einer besonders bevorzugten Ausführungsform werden als leitfähige Schicht dotierte Zinnoxide eingesetzt. Diese sind vorzugsweise mit Indium, Wolfram, Tellur, Fluor, Phosphor und/oder Antimon dotiert. Besonders bevorzugt werden mit Antimon dotiertes Zinnoxid, mit Antimon und Tellur dotiertes Zinnoxid oder mit Wolfram dotiertes Zinnoxid eingesetzt. Vorteilhaft können jedoch auch mit Zinn dotiertes Indiumoxid, mit Aluminium dotiertes Zinkoxid oder mit Fluor dotiertes Zinnoxid eingesetzt werden. Am meisten bevorzugt erfolgt der Einsatz von mit Antimon dotiertem Zinnoxid.

In einer besonders bevorzugten Ausführungsform der vorliegenden Erfindung werden funktionelle Pigmente eingesetzt, die ein Substrat aus natürlichem oder synthetischem Glimmer, Talk oder TiO₂ und eine Beschichtung aus mit Antimon dotiertem Zinnoxid aufweisen.

Solche Pigmente weisen entweder eine isotrope Formgebung auf, so dass die Pigmente in allen drei Dimensionen annähernd gleiche Abmessungen aufweisen und als Körner, Granulate, Sphären etc. vorliegen, wie beispielsweise bei TiO₂-Substraten, oder weisen eine anisotrope Formgebung auf, bei der die Pigmente eine bevorzugte Raumausrichtung zeigen und beispielsweise als Fasern, Stäbchen, Nadeln, Zylindern, Plättchen oder dergleichen vorliegen. Letzteres ist insbesondere bei elektrisch leitfähigen Pigmenten der Fall, die Substrate aus Glimmer-, Talk-, Sericit-, SiO₂-, Glas- oder Al₂O₃-Plättchen aufweisen. Diese werden im erfindungsgemäßen Verfahren bevorzugt und mit besonderem Erfolg eingesetzt und sind kommerziell zum Beispiel unter dem Namen Minatec® in verschiedenen Ausführungsformen von der Merck KGaA, Deutschland, erhältlich. Ähnlich aufgebaute elektrisch leitfähige Pigmente oder auch solche mit halbleitenden Eigenschaften werden auch von anderen Firmen kommerziell angeboten.

Liegen die Pigmente in anisotroper Form vor, weisen sie gewöhnlich ein Aspektverhältnis (Verhältnis des mittleren Durchmessers zur mittleren Teilchendicke) von mindestens 2 und bevorzugt von mindestens 5 auf. Das Aspektverhältnis kann in einem breiten Bereich variieren und bis 250, vorzugsweise bis 100, betragen.

Die Größe (längste Ausdehnung in einer Dimension, d.h. größte Länge oder größter Durchmesser) der anisotropen elektrisch leitfähigen Pigmente ist an sich nicht kritisch, muss jedoch auf die eingesetzte Rasterwalze abgestimmt werden. Die Ausdehnung der Pigmente in Länge bzw. Breite beträgt üblicherweise von 1 bis 200 µm, insbesondere von 5 bis 125 µm, bevorzugt von 1 bis 60 µm und ganz besonders bevorzugt von 1 bis 25 µm. Die Dicke der Pigmente liegt im Bereich von 0,01 bis 5 µm, insbesondere zwischen 0,05 und 4,5 µm und besonders bevorzugt zwischen 0,1 und 1 µm. Auch Pigmente mit isotroper Formgebung, die Durchmesser im Größenbereich von 1 bis 200 µm aufweisen, können im erfindungsgemäßen Verfahren eingesetzt werden.

Die hier genannten Größenordnungen für Pigmente mit isotroper oder anisotroper Formgebung gelten auch für alle anderen vorab genannten funktionellen Pigmente, die von einer elektrischen Leitfähigkeit verschiedene Funktionalitäten aufweisen.

Für die Verwendung von Pigmenten mit anisotroper, aber auch von Pigmenten mit isotroper Formgebung gilt allgemein der Grundsatz, dass die im erfindungsgemäßen Druckverfahren verwendeten Pigmente so ausgewählt werden, dass die Weite W der Näpfchen auf der Rasterwalze mindestens dem 1,5 bis 2fachen der längsten Ausdehnung der Pigmente entsprechen soll. Andernfalls würde es zu Störungen im Entleerungsverhalten der Druckfarbe aus den Näpfchen während des Benetzungsschrittes kommen.

Die Konzentration der funktionellen Pigmente in der diese enthaltenden Druckfarbe beträgt erfindungsgemäß zwischen 5 und 45 Prozent, bezogen auf den Feststoffanteil der Druckfarbe, insbesondere zwischen 15 und 35 Prozent. Bei einem Pigmentanteil von weniger als 5 Prozent, bezogen auf den Feststoffgehalt der Druckfarbe, kann die Funktionalität der Beschichtung nicht über den gesamten bedruckten Bereich sichergestellt werden oder ist unter Umständen gar nicht nachweisbar. Pigmentkonzentrationen von über 45 Prozent führen dagegen zur Verstopfung der Näpfchen auf der Rasterwalze sowie zu Entleerungsschwierigkeiten beim Benetzen der Rasterpunkte. Dadurch würde auch das Fortdruckverhalten im Druckprozeß in Mitleidenschaft gezogen. Aus diesem Grunde sind Pigmentkonzentrationen über den genannten Bereich hinaus nicht vorteilhaft.

Bei dem im erfindungsgemäßen Verfahren verwendeten Bedruckstoff kann es sich grundsätzlich um jeden Bedruckstoff handeln, der einem Rotationsdruckverfahren mit Flexodruckwerk zugänglich ist, also um Folien, Kartonagen und Gewebe beziehungsweise Vliese verschiedenster Art. Als besonders vorteilhaft erweist sich das erfindungsgemäße Verfahren jedoch bei Bedruckstoffen, die aus einem Zellulose enthaltenden Material bestehen oder eine zu bedruckende Oberfläche aus Zellulose-haltigem Material aufweisen. Dabei handelt es sich insbesondere um ungestrichenes Papier, gestrichenes Papier, Pappe, Kraftpapier oder Kraftliner. Diese Materialien weisen in der Regel eine raue Oberfläche auf und verfügen über eine gewisse Saugfähigkeit, die im Allgemeinen zwar eine schnelle Trocknung oder Verfestigung der gedruckten Beschichtung ermöglicht, beim Bedrucken mit einem herkömmlichen Flexodruckverfahren mit funktionellen Beschichtungen jedoch zu den bereits vorab genannten Mängeln führen kann. Diese Mängel können durch das erfindungsgemäße Druckverfahren in vorteilhafter Weise vermindert oder verhindert werden.

Das Aufbringen der das funktionelle Material enthaltenden Beschichtung auf den Bedruckstoff kann entweder auf den unbeschichteten Bedruckstoff erfolgen, wie es beispielsweise bei ungestrichenem Papier, Pappe oder Kraftliner der Fall ist, kann jedoch auch auf einen bereits vorbehandelten oder vorbeschichteten Bedruckstoff erfolgen (z. B. bei gestrichenem oder farbig vorbeschichtetem Papier). Außerdem kann der bereits mit der funktionellen Schicht erfindungsgemäß bedruckte Bedruckstoff noch mit weiteren Schichten überdruckt werden, zum Beispiel mit farbgebenden Schichten, Mustern, Motiven oder Ähnlichem. Bei dem Bedruckstoff mit einer funktionellen Beschichtung, welcher nach dem vorab beschriebenen Rotationsdruckverfahren hergestellt wird, handelt es sich um mittels einer Flexodruckvorrichtung mit einer funktionellen Beschichtung bedruckte Substrate verschiedener Art, bevorzugt jedoch um ungestrichenes Papier, gestrichenes Papier, Pappe, Kraftpapier oder Kraftliner, welche(s) eine UV- oder IR-Licht absorbierende oder reflektierende Beschichtung, eine elektrisch leitfähige Beschichtung, eine elektrisch halbleitfähige Beschichtung, eine elektrisch ableitfähige Beschichtung, eine magnetisierbare Beschichtung und/oder eine lumineszierende Beschichtung aufweist.

Besonders bevorzugt handelt es sich um ungestrichenes Papier, gestrichenes Papier, Pappe, Kraftpapier oder Kraftliner, welche(s) eine elektrisch leitfähige Beschichtung, eine elektrisch halbleitfähige Beschichtung oder eine elektrisch ableitfähige Beschichtung aufweist.

Die Zusammensetzungen und funktionellen Eigenschaften von Bedruckstoffen und Beschichtung einschließlich der darin enthaltenen Bestandteile sind oben bereits ausführlich beschrieben worden. Insofern wird hier auf die obige Beschreibung verwiesen. Möglich ist die Verwendung eines oben beschriebenen Bedruckstoffes mit funktioneller Beschichtung in Verpackungsmaterialien, Etiketten, Antistatikmaterialien, Dekorationsmaterialien, in Sicherheitsanwendungen, zur Lasermarkierung, als magnetisches Element oder Leuchtelement.

Mit dem erfindungsgemäßen Verfahren lassen sich mit Hilfe eines einfachen, adaptierten Flexodruckverfahrens und üblichen Vorrichtungen zusammenhängende funktionelle Beschichtungen auf Bedruckstoffen, insbesondere auf Bedruckstoffen mit rauer und saugfähiger Oberfläche, in einem einzigen Verfahrensschritt erzeugen, die über die gesamte bedruckte Fläche die gewünschte Funktionalität aufweisen und eine ausreichend hohe Schichtdicke aufweisen, um auch bei pigmenthaltiger Druckfarbe eine ausreichend hohe Pigmentkonzentration pro Flächeneinheit bedruckter Fläche zu gewährleisten. Das erfindungsgemäße Verfahren lässt sich daher vorteilhaft für das Bedrucken verschiedener Arten von Bedruckstoffen mit einem vergleichsweise günstigen Flexodruckverfahren einsetzen, was insbesondere für hohe Auflagen und im Verpackungsdruck von besonderer Bedeutung ist. Werden, wie es erfindungsgemäß besonders vorteilhaft ist, als Druckfarbe solche Druckfarben eingesetzt, die elektrisch leitfähige Pigmente enthalten, lassen sich in nur einem Arbeitsschritt elektrisch leitfähige, elektrisch ableitfähige oder elektrisch halbleitende Schichten auf Bedruckstoffen herstellen, die insbesondere in antistatischen Verpackungen verschiedener Art eine so gute Leitfähigkeit beziehungsweise Ableitfähigkeit des Verpackungsmaterials ergeben, dass eine einzige Verpackungseinheit genügt, um beispielsweise elektronische Bauteile vor plötzlicher Entladung zu schützen. Damit kann eine weitere zusätzliche, ableitfähige Umverpackung eingespart werden. Gleichzeitig lässt sich das erfindungsgemäße Verfahren in die üblichen Verpackungsdruckverfahren ohne großen Mehraufwand eingliedern, so dass auch zusätzliche umständliche und kostenintensive Beschichtungsvorgänge entfallen können.

Die Erfindung soll nachfolgend anhand von Beispielen erläutert, aber nicht auf diese beschränkt werden. Die Erläuterung, wie vorab bereits im beschreibenden Teil, erfolgt anhand der nachfolgenden Zeichnungen:
- Fig. 1: schematischer Aufbau eines Flexodruckwerkes
- Fig. 2: schematische Ansicht eines Teils einer Druckform mit mehreren Rasterpunkten
- Fig. 3: schematische Ansicht eines Teils einer Rasterwalze mit mehreren Näpfchen (6) (mechanisch graviert) und Stegen (15)
- Fig. 4, 5: schematische Ansicht der Benetzung eines Rasterpunktes gemäß dem Stand der Technik

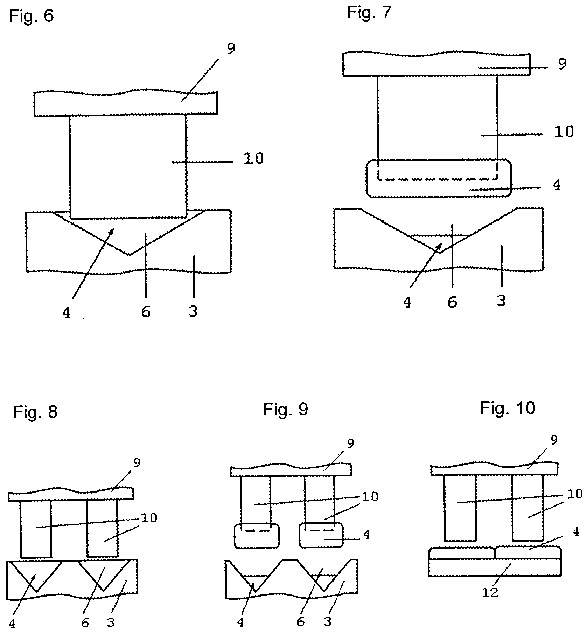

- Fig. 6, 7: schematische Ansicht der Benetzung eines Rasterpunktes gemäß der Erfindung
- Fig. 8, 9, 10: schematische Ansicht der Benetzung und Farbübertragung gemäß der Erfindung

### Beispiel 1:

Als Bedruckstoff (12) werden die helle (WK1) oder dunkle (WK2) Seite einer Wellpappe für Verpackungszwecke (jeweils Kraftliner, der als Oberflächenabdeckung für Wellpappe dient) verwendet. Die Viskosität einer lösemittelhaltige Druckfarbe (4), enthaltend 30 Gew.% eines elektrisch leitfähigen Pigmentes auf der Basis von plättchenförmigen Glimmersubstraten mit einer Beschichtung aus (Sb,Sn)O₂ mit einer Teilchengröße von 5-25 µm (Produkt der Merck KGaA, Deutschland), sowie 70 Gew.% eines lösemittelhaltigen, Bindemittel enthaltenden Varnishes (Siegwerk NC-201 der Fa. Siegwerk Druckfarben AG, Feststoffgehalt ca. 35%), wird mit einem Gemisch aus Ethanol und Ethylacetat 2:1 auf 33 sec (Auslaufbecher 4mm, nach DIN 53211) eingestellt. Diese Druckfarbe wird über eine Zulaufeinrichtung (5) in das Farbwerk (2) einer Flexodruckmaschine eingetragen. Die Näpfchen (6) einer rotierenden Rasterwalze (3) werden mit dem Farbwerk in Kontakt gebracht und dabei mit der Druckfarbe (4) befüllt. Überstehende Druckfarbe wird mit Hilfe einer Rakel (7) von der Oberfläche der Rasterwalze abgestreift.
Die Rasterwalze weist eine Rasterfrequenz von 34 Ucm 60° (Näpfchenweite W 265 µm) bzw. 60 Ucm 60° (Näpfchenweite W 129 µm) auf.

Eine Flexodruckform (9) mit einer Rasterfrequenz von 34 Ucm bzw. 60 Ucm (DuPont DEC 2,84, Klebeband Tesa 52121) wird auf einem Formzylinder befestigt und mit der rotierenden Rasterwalze in Kontakt gebracht. Die Rasterpunktgröße G der Rasterpunkte (10) auf der Druckform (9) variiert im Bereich von 26 µm bis >275 µm (34 Ucm, 5% bis 95% Flächendeckung FD) und 10 µm bis >170 µm (60 L/cm, 5% bis 95% Flächendeckung FD). Die Übertragung der Druckfarbe auf den Bedruckstoff (Druckvorgang) erfolgt bei einer Geschwindigkeit von 30 m/min. Der beschichtete Bedruckstoff wird trocknen gelassen.

Der elektrische Oberflächenwiderstand des bedruckten Kartons wird mit einem Widerstandsmessgerät Milli TO3 der Fa. Fischer Elektronik gemessen. Es wird eine Zweipunktelektrode mit Federandruck mit einem Kontaktgummi- bzw. Elektrodendurchmesser von 4 mm, Elektrodenabstand 6,4 mm, Federkraft ca 3,5 N, Gesamtdruck 7 N, verwendet. Bei Oberflächenwiderständen im Bereich < 5*10⁵ Ohm erfolgt die Messung bei einer Spannung von 4 V (Low), bei Oberflächenwiderständen im Bereich >5*10⁵ Ohm erfolgt die Messung bei einer Spannung von 100 V (High).
In Tabelle 1 sind die erzielten elektrischen Widerstände der Beschichtung unter den jeweiligen Druckbedingungen dargestellt.
Der elektrische Oberflächenwiderstand einer unbedruckten Wellpappe liegt bei ca. xE +10 Ohm (x*10¹⁰).

**Tabelle 1:**

| Raster Druckform | Raster Rasterwalze | Größe Rasterpunkt [µm] | el. Widerstand [Ohm] | G/W |
|---|---|---|---|---|
| 34 Ucm | 34 L/cm 60° | >275 (95%FD) | 2,0E +10 (WK1) | >1,04 |
| | | >275 (90% FD) | 1,0E +10 (WK1) | >1,04 |
| | | 275 (75% FD) | 1,5E +10 (WK1) | 1,04 |
| | | 201 (50% FD) | 1,0E +10 (WK1) | 0,76 |
| | | 126 (25% FD) | 9,5E +05 (WK1) | 0,47 |
| | | 90 (15% FD) | 4,3E +05 (WK1) | 0,34 |
| | | 66 (10% FD) | 1,6E +05 (WK1) | 0,25 |
| | | 40,5 (8% FD) | 1,5E +05 (WK1) | 0,15 |
| | | 26 (5% FD) | 1,8E +05 (WK1) | 0,10 |
| 60 Ucm | 60 Ucm 60° | >170 (95% FD) | 1,3E +10 (WK2) | >1,32 |
| | | 170 (90% FD) | 9,4E +09 (WK2) | 1,32 |
| | | 139 (75% FD) | 8,6E +09 (WK2) | 1,08 |
| | | 112 (50% FD) | 5,5E +09 (WK2) | 0,87 |
| | | 69 (25% FD) | 3,5E +06 (WK2) | 0,54 |
| | | 40,5 (15% FD) | 2,3E +06 (WK2) | 0,31 |
| | | 26 (10% FD) | 1,8E +06 (WK2) | 0,20 |
| | | 20 (8% FD) | 3,5E +05 (WK2) | 0,16 |
| | | 10 (5% FD) | 8,0E +05 (WK2) | 0,08 |

### Beispiel 2:

Beispiel 1 wird wiederholt mit der Änderung, dass eine wässrige Druckfarbe (Varnish: Senolith 350 298 der Fa. Weilburger, Feststoffgehalt ca. 40%, Viskositätseinstellung mit Wasser auf 33 sec.) bei einer Rasterfrequenz der Rasterwalze von 60 Ucm 60° und der Druckform von 60 Ucm verwendet wird. Die anderen Bedingungen entsprechen denen aus Beispiel 1. Die Ergebnisse der Widerstandsmessung sind in Tabelle 2 dargestellt.

**Tabelle 2:**

| Größe Rasterpunkt [µm] | el. Widerstand [Ohm], WK1 | el. Widerstand [Ohm], WK2 | G/W |
|---|---|---|---|
| >170 (95% FD) | 1,7E +10 | 6,0E +09 | >1,32 |
| 170 (90% FD) | 1,5E +10 | 6,1E +09 | 1,32 |
| 139 (75% FD) | 7,0E +09 | 6,8E +09 | 1,08 |
| 112 (50% FD) | 7,0E +09 | 3,3E +07 | 0,87 |
| 69 (25% FD) | 1,0E +06 | 4,0E +05 | 0,53 |
| 40,5 (15% FD) | 9,5E +05 | 1,7E +05 | 0,31 |
| 26 (10% FD) | 1,8E +06 | 1,0E +05 | 0,20 |
| 20 (8% FD) | 4,3E +06 | 9,5E +04 | 0,16 |
| 10 (5% FD) | 8,0E +06 | 6,8E +04 | 0,08 |

### Beispiel 3:

Bei der Verwendung eines gestrichenen Kartons als Bedruckstoff können beim Verdrucken einer lösemittelhaltigen Druckfarbe der in Beispiel 1 genannten Zusammensetzung bei einer Rasterfrequenz der Rasterwalze von 34 Ucm 60° und einer Rasterfrequenz der Druckform von 34 L/cm bei einem Verhältnis G/W von 0,34 bis 0,76 (Flächendeckung 15 bis 50%) sogar elektrische Widerstände mit Werten von ca. 6E +04, und bei einer Rasterfrequenz der Rasterwalze von 60 L/cm 60° und einer Rasterfrequenz der Druckform von 60 L/cm bei einem Verhältnis G/W von 0,08 bis 0,20 (Flächendeckung 5 bis 10%) elektrische Widerstände mit Werten von ca. 4,5E +04 erhalten werden.

### Liste der Bezugszeichen

- (1): Rotationsdruckvorrichtung
- (2): Farbwerk
- (3): Rasterwalze
- (4): Druckfarbe
- (5): Zulaufeinrichtung
- (6): Näpfchen
- (7): Rakel
- (8): Formzylinder
- (9): Druckform
- (10): Rasterpunkte
- (11): Druckzylinder
- (12): Bedruckstoff
- (13): Stirnfläche des Rasterpunktes
- (14): Mantelfläche des Rasterpunktes
- (15): Stege

## Patentansprüche

1. Rotationsdruckverfahren zum Auftragen einer Beschichtung auf einen Bedruckstoff (12), wobei in einem Befüllungsschritt auf einer rotierenden Rasterwalze (3) angeordnete Näpfchen (6) mit einer Druckfarbe (4) befüllt werden und nachfolgend in einem Benetzungsschritt die Druckfarbe (4) aus den Näpfchen (6) der Rasterwalze (3) Stirnflächen (13) von Rasterpunkten (10) benetzt, wobei die Rasterpunkte (10) die Stirnflächen (13) und daran angrenzende Mantelflächen (14) aufweisen und auf einer flexiblen, auf einem rotierenden Formzylinder (8) befestigten Druckform (9) angeordnet sind, und wobei in einem Übertragungsschritt der Bedruckstoff (12) durch einen rotierenden Druckzylinder (11) an die Druckform (9) radial angepresst und die Druckfarbe (4) auf den Bedruckstoff (12) übertragen wird,
**dadurch gekennzeichnet, dass** die Druckfarbe funktionelle Polymermaterialien enthält, bei denen es sich um flüssigkristalline Materialien oder elektrisch leitfähige Polymere handelt, oder dass die Druckfarbe funktionelle Pigmente sowie mindestens ein Bindemittel enthält, wobei die funktionellen Pigmente ausgewählt sind aus UV- oder IR-Licht absorbierenden oder reflektierenden Pigmenten, elektrisch leitfähigen Pigmenten, elektrisch halbleitenden Pigmenten, magnetisierbaren Pigmenten und/oder lumineszierenden Pigmenten, und dass mindestens 50 Prozent der Rasterpunkte (10) auf der Druckform (9) während des Benetzungsschrittes in die Näpfchen (6) der Rasterwalze (3) eintauchen, wobei neben den Stirnflächen (13) auch die Mantelflächen (14) der Rasterpunkte (10) zu 10 bis 100%, bezogen auf die jeweilige Mantelfläche, mit der Druckfarbe (4) benetzt werden, wobei die Rasterpunkte (10) eine Rasterpunktgröße G und die Näpfchen (6) eine Weite W aufweisen und das Verhältnis G/W einen Wert im Bereich von 0,05 bis 0,80 darstellt.

2. Rotationsdruckverfahren gemäß Anspruch 1, **dadurch gekennzeichnet, dass** mindestens 70 Prozent der Rasterpunkte (10) in die Näpfchen (6) eintauchen.

3. Rotationsdruckverfahren gemäß den Ansprüchen 1 und 2, **dadurch gekennzeichnet, dass** das Verhältnis G/W einen Wert im Bereich von 0,15 bis 0,60 darstellt.

4. Rotationsdruckverfahren gemäß einem oder mehreren der Ansprüche 1 bis 3, **dadurch gekennzeichnet, dass** die Druckform und die Rasterwalze jeweils eine Rasterfrequenz im Bereich von 34 Linien/cm bis 60 Linien/cm aufweisen.

5. Rotationsdruckverfahren gemäß einem oder mehreren der Ansprüche 1 bis 4, **dadurch gekennzeichnet, dass** die Druckform auf ihrer gesamten Oberfläche mit Rasterpunkten versehen ist.

6. Rotationsdruckverfahren gemäß einem oder mehreren der Ansprüche 1 bis 5, **dadurch gekennzeichnet, dass** es sich bei dem Bedruckstoff um ein Zellulose haltiges Material handelt.

7. Rotationsdruckverfahren gemäß Anspruch 6, **dadurch gekennzeichnet, dass** das Zellulose haltige Material ausgewählt ist aus ungestrichenem Papier, gestrichenem Papier, Pappe, Kraftpapier oder Kraftliner.

8. Rotationsdruckverfahren gemäß den Ansprüchen 1 bis 7, **dadurch gekennzeichnet, dass** die funktionellen Pigmente eine isotrope oder anisotrope Formgebung aufweisen.

## Claims

1. Rotary printing process for the application of a coating to a print substrate (12), where cells (6) arranged on a rotating anilox roll (3) are filled with a printing ink (4) in a filling step and the printing ink (4) from the cells (6) of the anilox roll (3) subsequently wets front faces (13) of screen dots (10) in a wetting step, where the screen dots (10) have front faces (13) and lateral surfaces (14) adjacent thereto and are arranged on a flexible printing plate (9) attached to a rotating plate cylinder (8), and where, in a transfer step, the print substrate (12) is pressed radially against the printing plate (9) by a rotating impression cylinder (11) and the printing ink (4) is transferred to the print substrate (12),
**characterised in that** the printing ink comprises functional polymer materials which are liquid-crystalline materials or electrically conductive polymers, or **in that** the printing ink comprises functional pigments and at least one binder, where the functional pigments are selected from UV or IR light-absorbing or -reflecting pigments, electrically conductive pigments, electrically semiconducting pigments, magnetisable pigments and/or luminescent pigments, and **in that** at least 50 per cent of the screen dots (10) on the printing plate (9) dip into the cells (6) of the anilox roll (3) during the wetting step, where, besides the front faces (13), the lateral surfaces (14) of the screen dots (10) are also wetted with the printing ink (4) in an amount of 10 to 100%, based on the respective lateral surface, where the screen dots (10) have a screen dot size G and the cells (6) have a width W and the ratio GNV represents a value in the range from 0.05 to 0.80.

2. Rotary printing ink according to Claim 1, **characterised in that** at least 70 per cent of the screen dots (10) dip into the cells (6).

3. Rotary printing process according to Claims 1 and 2, **characterised in that** the ratio G/W represents a value in the range from 0.15 to 0.60.

4. Rotary printing process according to one or more of Claims 1 to 3, **characterised in that** the printing plate and the anilox roll each have a line count in the range from 34 lines/cm to 60 lines/cm.

5. Rotary printing process according to one or more of Claims 1 to 4, **characterised in that** the printing plate is provided with screen dots over its entire surface.

6. Rotary printing process according to one or more of Claims 1 to 5, **characterised in that** the print substrate is a cellulose-containing material.

7. Rotary printing process according to Claim 6, **characterised in that** the cellulose-containing material is selected from uncoated paper, coated paper, card, kraft paper or kraft liner.

8. Rotary printing process according to Claims 1 to 7, **characterised in that** the functional pigments have an isotropic or anisotropic shape.

## Revendications

1. Procédé d'impression rotatif pour l'application d'un revêtement sur un substrat d'impression (12), dans lequel des cellules (6) qui sont agencées sur un rouleau anilox tournant (3) sont remplies d'une encre d'impression (4) au niveau d'une étape de remplissage et l'encre d'impression (4) qui provient des cellules (6) du rouleau anilox (3) humidifie subséquemment des faces avant (13) de points d'écran (10) au niveau d'une étape d'humidification, dans lequel les points d'écran (10) comportent des faces avant (13) et des surfaces latérales (14) qui leur sont adjacentes et sont agencés sur une plaque d'impression flexible (9) qui est fixée à un cylindre porte-plaque tournant (8), et dans lequel, au niveau d'une étape de transfert, le substrat d'impression (12) est pressé radialement contre la plaque d'impression (9) par un cylindre d'impression tournant (11) et l'encre d'impression (4) est transférée sur le substrat d'impression (12),
**caractérisé en ce que** l'encre d'impression comprend des matériaux de polymère fonctionnel qui sont des matériaux cristallins liquides ou des polymères électriquement conducteurs ou **en ce que** l'encre d'impression comprend des pigments fonctionnels et au moins un agent de liaison, dans lequel les pigments fonctionnels sont sélectionnés parmi les pigments absorbeurs de lumière ultraviolette/UV ou de lumière infrarouge/IR ou les pigments réfléchissant la lumière ultraviolette/UV ou la lumière infrarouge/IR, les pigments électriquement conducteurs, les pigments électriquement semiconducteurs, les pigments magnétisables et/ou les pigments luminescents, et **en ce qu'**au moins 50 pourcents des points d'écran (10) sur la plaque d'impression (9) sont plongés à l'intérieur des cellules (6) du rouleau anilox (3) pendant l'étape d'humidification, dans lequel, en plus des faces avant (13), les surfaces latérales (14) des points d'écran (10) sont également humidifiées par l'encre d'impression (4) selon une quantité de 10 à 100 %, sur la base de la surface latérale respective, dans lequel les points d'écran (10) présentent une taille de point d'écran G et les cellules (6) présentent une largeur W et le rapport G/W représente une valeur dans la plage de 0,05 à 0,80.

2. Procédé d'impression rotatif selon la revendication 1, **caractérisé en ce qu'**au moins 70 pourcents des points d'écran (10) sont plongés à l'intérieur des cellules (6).

3. Procédé d'impression rotatif selon les revendications 1 et 2, **caractérisé en ce que** le rapport G/W représente une valeur dans la plage de 0,15 à 0,60.

4. Procédé d'impression rotatif selon une ou plusieurs des revendications 1 à 3, **caractérisé en ce que** la plaque d'impression et le rouleau anilox comportent chacun un comptage de lignes dans la plage de 34 lignes/cm à 60 lignes/cm.

5. Procédé d'impression rotatif selon une ou plusieurs des revendications 1 à 4, **caractérisé en ce que** la plaque d'impression est munie de points d'écran sur la totalité de sa surface.

6. Procédé d'impression rotatif selon une ou plusieurs des revendications 1 à 5, **caractérisé en ce que** le substrat d'impression est un matériau contenant de la cellulose.

7. Procédé d'impression rotatif selon la revendication 6, **caractérisé en ce que** le matériau contenant de la cellulose est sélectionné parmi le papier non couché/non revêtu, le papier couché/revêtu, le carton, le papier kraft ou une couverture/un liner kraft.

8. Procédé d'impression rotatif selon les revendications 1 à 7, **caractérisé en ce que** les pigments fonctionnels présentent une forme isotrope ou anisotrope.
